**Europäisches Patentamt**

**European Patent Office**

**Office européen des brevets**

(19)

(11) Veröffentlichungsnummer : **0 050 205 B1**

(12) **EUROPÄISCHE PATENTSCHRIFT**

(45) Veröffentlichungstag der Patentschrift :
15.05.85

(51) Int. Cl.⁴ : **B 60 R 19/18**

(21) Anmeldenummer : **81106817.0**

(22) Anmeldetag : **01.09.81**

(54) **Stossfänger für ein Kraftfahrzeug, insbesondere einen Personenwagen.**

(30) Priorität : **18.10.80 DE 3039365**

(43) Veröffentlichungstag der Anmeldung :
**28.04.82 Patentblatt 82/17**

(45) Bekanntmachung des Hinweises auf die Patenterteilung : **15.05.85 Patentblatt 85/20**

(84) Benannte Vertragsstaaten :
**DE FR GB IT**

(56) Entgegenhaltungen :
**DE-A- 2 650 096
DE-A- 2 754 867
DE-A- 2 754 868
DE-A- 2 825 838
DE-A- 2 838 572
DE-A- 2 927 036**

(73) Patentinhaber : **Dr.Ing.h.c. F. Porsche Aktiengesellschaft
Porschestrasse 42
D-7000 Stuttgart 40 (DE)**

(72) Erfinder : **Eyb, Wolfgang
Justinus-Kerner-Strasse 5
D-7250 Leonberg (DE)**

**Beschreibung**

Die Erfindung betrifft einen Stoßfänger für ein Kraftfahrzeug, insbesondere einen Personenwagen, der eine Abdeckung aus elastischem Werkstoff und einen aus glasfaserverstärktem Kunststoff gefertigten Träger umfaßt, wobei der von der Abdeckung zumindest abschnittsweise umgebene Träger ein Querteil aufweist, das unter Vermittlung von zwei außerhalb einer Mittellängsebene angeordneter und sich etwa in Fahrzeuglängsrichtung erstreckender Stützen an Aufbauelemente angeschlossen ist.

Bei einem bekannten Stoßfänger (DE-A-27 54 868) der eingangs genannten Gattung sind die beiden Stützen jeweils mit Abstand zu den Außenseiten des formsteifen Trägers angeordnet, so daß bei einem Stoß auf die Kragteile des Trägers relativ hohe Biegemomente auftreten, die zu Überbeanspruchungen des Trägers führen können.

Bei einem weiteren bekannten Stoßfänger (DE-A-28 25 838) stützt sich der Träger an hydraulischen Dämpfern ab, d. h., der Träger hat eine solche Steifigkeit, daß die Energieabsorption allein über die Dämpfer erfolgt. Dieser Ausführung haftet jedoch der Nachteil an, daß die hydraulischen Dämpfer zusätzliche Kosten verursachen und auch zur Gewichtserhöhung eines Kraftfahrzeuges beitragen.

Aufgabe der Erfindung ist es, einen Stoßfänger mit einer Abdeckung und einem Träger zu schaffen, der die auftretenden Belastungen gut aufnimmt und einen einfachen Aufbau sowie ein geringes Gewicht aufweist.

Nach der Erfindung wird diese Aufgabe durch die Merkmale des kennzeichnenden Teils des Anspruchs 1 gelöst. Die Stützen sind also an den Außenseiten des Querteils angeordnet und gemeinsam mit dem Querteil den dämpferlos am Aufbau abgestützten formsteifen Träger bilden. Hierzu ist es von Vorteil, wenn das Querteil einstückig mit den Stützen verbunden ist. Das vorzugsweise einen rohrförmigen Querschnitt aufweisende Querteil besteht aus glasfaserverstärktem Kunststoff und die Stützen können sonst durch in das Querteil eingesetzte separate Teile gebildet werden. Um eine gute Verbindung zu erreichen, ragen Aufnahmeabschnitte der Teile in das Querteil hinein. Die Teile bestehen vorzugsweise aus Leichtmetall. Nach einer bevorzugten Form der Erfindung, sind zwischen den Enden der Stützen und den Aufnahmeelementen Unterlagen aus elastischem Werkstoff und an den Enden sind Schlitzöffnungen für Befestigungsmittel vorgesehen. Am Träger sind Stoßhörner aus elastischem Werkstoff angebracht. Jedes Stoßhorn weist ein inneres Abstützelement auf, das härter ist als das übrige Stoßhorn.

Am Querteil sind zwei mit Abstand zueinander angeordnete Stoßhörner angebracht. Etwa am Übergangsbereich zwischen Querteil und jeder Stütze ist ein schräg zur Fahrzeuglängsrichtung angebrachtes Stoßhorn vorgesehen. Das Querteil ist, vorzugsweise entlang von aufrechten Querschnittsbereichen, mit glasfaserverstärkten Kunststoffstäben versehen.

Die mit der Erfindung hauptsächlich erzielten Vorteile sind darin zu sehen, daß durch die Anordnung und Ausgestaltung des Trägers die Stoßenergie ohne Anordnung von hydraulischen Dämpfern gut aufgenommen und vernichtet wird. Zudem weist der Träger einen einfachen Aufbau auf, was sich kosten- und gewichtsmindernd auswirkt.

In der Zeichnung wird ein Ausführungsbeispiel der Erfindung näher erläutert.

Es zeigt

Figur 1 eine schematisch dargestellte, von oben gesehene Bugpartie eines Kraftfahrzeuges mit dem erfindungsgemäßen Stoßfänger,

Figur 2 eine Teilansicht der Fig. 1 mit einer anderen Ausführungsform,

Figur 3 einen Schnitt nach der Linie III-III der Fig. 1 in größerem Maßstab,

Figur 4 einen Schnitt entsprechend Fig. 3 einer anderen Ausführungsform,

Figur 5 eine Einzelheit X der Fig. 1 in größerem Maßstab.

Das Kraftfahrzeug 1 weist in dem gezeigten Bereich eine Bugpartie 2 eines Aufbaues 3 auf. Der Aufbau 3 besitzt längsträgerartige Aufbauelemente 4, 5, die über einen Querträger 6 miteinander verbunden sind. Mit dem Aufbau 3 verbunden ist ein Stoßfänger 7, der eine elastische Abdeckung 8 und einen formsteilen Träger 9 umfaßt. Die Abdeckung 8 umschließt den Träger 9 und ist bei 10 mit einem Seitenteil 11 des Aufbaus 3 verbunden.

Im vorderen Bereich des Stoßfängers 7 verläuft die Abdeckung 8 einerseits mit Abstand A zum Träger 9 und andererseits ist sie an den Träger 9 herangeführt, wodurch eine Nische 12 entsteht.

Der Träger 9 besteht aus glasfaserverstärktem Kunststoff (Glasanteil etwa 35 bis 40 %) und er ist nach Art eines Trägers auf zwei Stützen relativ weit außerhalb (Abstand B) der Mittellängsebene C-C des Fahrzeugs an die Aufbauelemente 4, 5 angeschlossen. Die Aufbauelemente 4, 5 erstrecken sich entweder innerhalb der Räder oder in Spurweite der Räder (nicht dargestellt).

Der Träger 9 selbst wird durch ein Querteil 13 und Stützen 14, 15 gebildet, wobei letztere an den Außenseiten des Querteils 13 angeordnet sind. Die etwa in Fahrzeuglängsrichtung verlaufenden Stützen 14, 15 weisen Enden 16, 17 auf, die an die Aufbauelemente 4, 5 herangeführt und mittels Befestigungselementen 18 (Schrauben) befestigt sind.

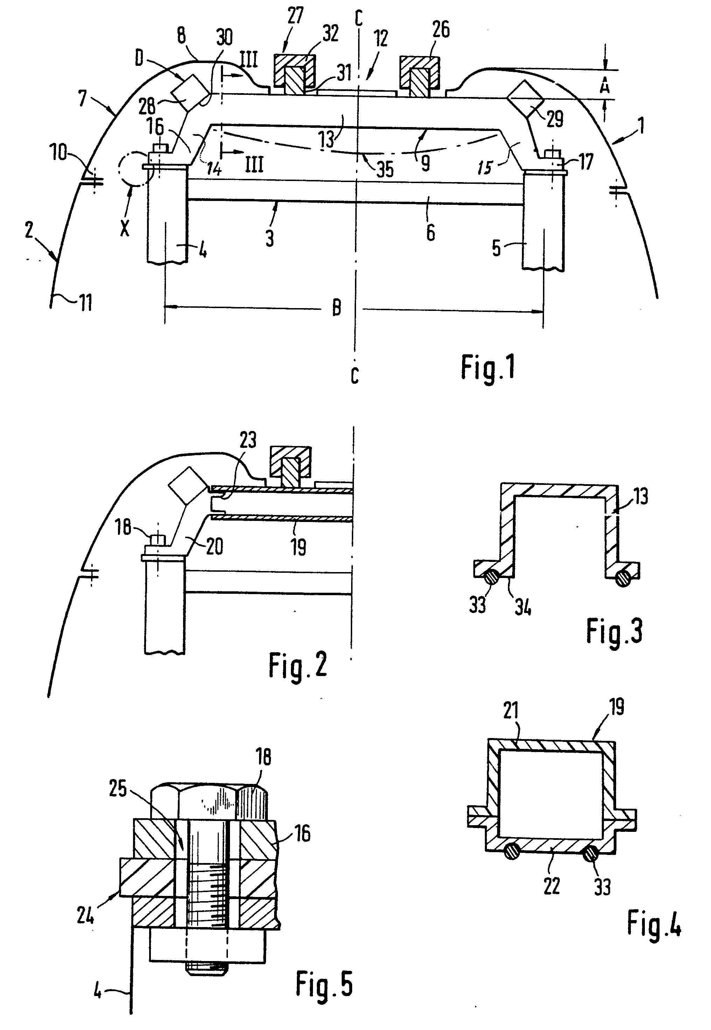

Das Querteil 13 und die Stützen 14, 15 sind einstückig miteinander verbunden. Es besteht aber auch gemäß Fig. 2 die Möglichkeit, nur das Querteil 19 aus glasfaserverstärktem Kunststoff herzustellen und die Stützen 20 in das Querteil 19 als separate Teile einzusetzen. Das Querteil 19 weist einen rohrförmigen Querschnitt auf und ist aus zwei Halbschalen 21, 22 hergestellt. An den aus Leichtmetall hergestellten Stützen 20 sind Aufnahmeabschnitte 23 vorgesehen, die in das Querteil 19 hineinragen.

Zwischen den Enden 16, 17 und den Aufbauelementen 4, 5 sind Unterlagen 24 aus elastischem Werkstoff vorgesehen (Fig. 5). Ferner sind an den Enden 16, 17 Schlitzöffnungen 25 für die Befestigungselemente 18 angebracht. Dadurch können die bei Durchbiegung des Trägers 9 im Befestigungsbereich der Stützen 16, 17 auftretenden Belastungen zumindest in gewissem Umfang reduziert werden.

Am Träger 9 sind außerdem Stoßhörner 26, 27, 28, 29 aus elastischem Werkstoff angeordnet, und zwar die Stoßhörner 26, 27 mit Abstand, jedoch innerhalb der Aufbauelemente 4, 5, am Querteil 13 und die Stoßhörner 28, 29 am Übergangsbereich 30 zwischen Querteil 13 und Stützen 14, 15. Die im Übergangsbereich 30 vorgesehenen Stoßhörner 28, 29 sind schräg zur Fahrzeuglängsrichtung ausgerichtet, um die bei einem Schrägaufprall (Richtung D) des Fahrzeuges entstehende Stoßenergie zu absorbieren.

Jedes Stoßhorn 26 weist ein inneres Abstützelement 31 auf, da von einer Stoßhornhülle 32 umgeben und härter ist als die letztere.

Zusätzlich sind an Querteil 13 (auch am Querteil 19), das einen offenen, gegebenenfalls geschlossenen Querschnitt besitzt, glasfaserverstärkte, einen kreisförmigen Querschnitt aufweisende Kunststoffstäbe 33 (Glasanteil 60 bis 70 %), und zwar an aufrechten Querschnittsbereichen 34, vorgesehen.

Wird der Stoßfänger 7 über die Stoßhörner 26, 27 belastet (z. B. bei Fahrgeschwindigkeit 8 km/h), so wird zunächst ein Teil der Energie durch die Stoßhörner 26, 27 vernichtet. Danach verformt sich der Träger 9 etwa wie die Biegelinie 35 zeigt und absorbiert die Restenergie.

## Patentansprüche

1. Stoßfänger für ein Kraftfahrzeug, insbesondere einen Personenwagen, der eine Abdeckung aus elastischem Werkstoff und einen aus glasfaserverstärktem Kunststoff gefertigten Träger umfaßt, wobei der von der Abdeckung zumindest abschnittsweise umgebene Träger ein Querteil aufweist, das unter Vermittlung von zwei außerhalb einer Mittellängsebene angeordneten und sich etwa in Fahrzeuglängsrichtung erstreckenden Stützen an Aufbauelemente angeschlossen ist, dadurch gekennzeichnet, daß die Stützen (14, 15, 20) an den Außenseiten des Querteils (13, 19) angeordnet sind und gemeinsam mit dem Querteil (13, 19) den dämpferlos abgestützten, formsteifen Träger (9) bilden, wobei die Stützen (14, 15) entweder einstückig mit dem Querteil (13) verbunden sind oder quer verlaufende Aufnahmeabschnitte (23) der separat hergestellten Stützen (20) in Endabschnitte des vorzugsweise einen rohrförmigen Querschnitt aufweisenden Querteils (19) hineinragen.

2. Stoßfänger nach Anspruch 1, dadurch gekennzeichnet, daß die Stützen (20) aus Leichtmetall bestehen.

3. Stoßfänger nach Anspruch 1, dadurch gekennzeichnet, daß zwischen Enden (16, 17) der Stützen (20) und den Aufbauelementen (4, 5) Unterlagen (24) aus elastischem Werkstoff und an den Enden (16, 17) Schlitzöffnungen (25) für Befestigungsmittel (Schrauben 18) vorgesehen sind.

4. Stoßfänger nach Anspruch 1, dadurch gekennzeichnet, daß am Träger Stoßhörner (26, 27, 28, 29) aus elastischem Werkstoff angebracht sind.

5. Stoßfänger nach Anspruch 4, dadurch gekennzeichnet, daß jedes Stoßhorn (z. B. 27) ein inneres Abstützelement (31) aufweist, das härter ist als das übrige Stoßhron.

6. Stoßfänger nach den Ansprüchen 1, 4 und 5, dadurch gekennzeichnet, daß man Querteil (13, 19) zwei mit Abstand zueinander angeordnete Stoßhörner (26, 27) angebracht sind.

7. Stoßfänger nach den Ansprüchen 1, 4 und 5, dadurch gekennzeichnet, daß etwa am Übergangsbereich (30) zwischen Querteil (13, 19) und jeder Stütze (14, 20) ein schräg zur Fahrzeuglängsrichtung angebrachtes Stoßhorn (28, 29) vorgesehen ist.

8. Stoßfänger nach Anspruch 1, dadurch gekennzeichnet, daß das Querteil (13, 19) vorzugsweise entlang von aufrechten Querschnittsbereichen (34) mit glasfaserverstärkten Kunststoffstäben (33) versehen ist.

## Claims

1. A bumper for a motor vehicle, in particular a passenger car, which comprises a covering of resilient material and a bearing member made from plastics material reinforced with glass-fibres, the bearing member, which is surrounded by the covering at least in part, comprising a transverse member which is joined to structural elements by way of two supports disposed outside a median longitudinal plane and extending approximately in the longitudinal direction of vehicle, characterized in that the supports (14, 15, 20) are disposed on the exterior sides of the transverse member (13, 19) and, jointly with the transverse member (13, 19), form the non-deformable bearing member (9) supported without shock-absorbers, and either the supports (14, 15) are integrally joined to the transverse member (13, 19) or transversely extending receiving portions (23) of the separately produced supports (20) project into end portions of the transverse member (19) which preferably has a tubular cross-section.

2. A bumper according to Claim 1, characterized in that the supports (20) consist of light metal.

3. A bumper according to Claim 1, characterized in that underlayers (24) of resilient material are provided between the ends (16, 17) of the supports (20) and the structural elements (4, 5) and slotted openings (25) for fastening means (screws 18) are provided at the ends (16, 17).

4. A bumper according to Claim 1, characterized in that impact guards (26, 27, 28, 29) of resilient material are disposed on the bearing member.

5. A bumper according to Claim 4, characterized in that each impact guard (e. g. 27) has an inner support element (31) which is harder than the rest of the impact guard.

6. A bumper according to Claims 1, 4 and 5, characterized in that two impact guards (26, 27) arranged at a distance from another are disposed on the transverse member (13, 19).

7. A bumper according to Claims 1, 4 and 5, characterized in that an impact guard (18, 29) arranged obliquely to the longitudinal direction of the vehicle is provided approximately in the transition region (30) between the transverse member (13, 19) and each support (14, 20).

8. A bumper according to Claim 1, characterized in that the transverse member (13, 19) is provided with plastics rods (33) reinforced with glass fibres preferably along upright cross-sectional areas (34).

**Revendications**

1. Pare-choc pour véhicule, notamment pour voiture particulière, comprenant un revêtement en matière plastique et un support en matière plastique renforcée aux fibres de verre, le support entouré par le revêtement au moins par sections comportant une partie transversale se raccordant à des éléments de structure de carrosserie avec interposition de deux appuis placés à l'extérieur d'un plan de symétrie longitudinal du véhicule, caractérisé en ce que les appuis (14, 15, 20) sont placés sur les faces extérieures de la partie transversale (13, 19) et forment, en même temps que la partie transversale (13, 19), le support indéformable (9), appuyé sans amortisseurs, les appuis (14, 15) étant reliés d'un seul tenant avec la partie transversale (13) ou bien des sections de réception transversales (23) des appuis (20) formés séparément pénétrant dans des sections terminales de la partie transversale (19) présentant une section droite tubulaire.

2. Pare-choc selon la revendication 1, caractérisé en ce que les appuis (20) sont en métal léger.

3. Pare-choc selon la revendication 1, caractérisé en ce que des supports (24) en matière élastique se trouvent entre les extrémités (16, 17) des appuis (20) et les éléments de structure de carrosserie (4, 5), et en ce que des ouvertures en forme de fente (25) destinées à des moyens de fixation, sont formées aux extrémités (16, 17).

4. Pare-choc selon la revendication 1, caractérisé en ce que des tampons (26, 27, 28, 29) en matière élastique sont placés sur le support.

5. Pare-choc selon la revendication 4, caractérisé en ce que chaque tampon (par exemple, 27) comporte un élément d'appui intérieur (31), plus dur que le reste du tampon.

6. Pare-choc selon les revendications 1, 4 et 5, caractérisé en ce que deux tampons (26, 27) sont placés à distance l'un de l'autre sur la partie transversale (13, 19).

7. Pare-choc selon les revendications 1, 4 et 5, caractérisé en ce qu'un tampon (28, 29) disposé obliquement par rapport à la direction longitudinale du véhiculé, est placé entre la partie transversale (13, 19) et chaque appui (14, 20).

8. Pare-choc selon la revendication 1, caractérisé en ce que la partie transversale (13, 19) comporte, de préférence le long des zones de section droite verticales (34), des barreaux de matière plastique renforcés aux fibres de verre (33).

Fig.1

Fig.2

Fig.3

Fig.4

Fig.5